(19) Europäisches Patentamt
European Patent Office
Office européen des brevets

(11) Publication number: **0 598 783 B1**

(12) **EUROPEAN PATENT SPECIFICATION**

(45) Date of publication of patent specification: **27.12.95**

(51) Int. Cl.⁶: **C04B 38/00**, B01F 3/00, C04B 35/00

(21) Application number: **92917010.8**

(22) Date of filing: **12.08.92**

(86) International application number:
**PCT/GB92/01493**

(87) International publication number:
**WO 93/04013 (04.03.93 93/06)**

(54) **POROUS ARTICLES**

(30) Priority: **12.08.91 GB 91174219**
**12.08.91 GB 91174227**

(43) Date of publication of application:
**01.06.94 Bulletin 94/22**

(45) Publication of the grant of the patent:
**27.12.95 Bulletin 95/52**

(84) Designated Contracting States:
**AT BE CH DE DK ES FR GB GR IE IT LI LU MC NL SE**

(56) References cited:
EP-A- 0 120 243        EP-A- 0 130 031
DE-A- 1 965 008        DE-A- 3 801 132
DE-C- 347 057          FR-A- 1 003 500
FR-A- 1 482 214        FR-A- 1 573 863
US-A- 3 041 190

**PATENT ABSTRACTS OF JAPAN vol. 13, no. 84 (C-572)(3432) 27 February 1989 & JP-A-53270368**

(73) Proprietor: **DYTECH CORPORATION LIMITED**
**Stopes Road**
**Stannington,**
**Sheffield S6 6BW (GB)**

(72) Inventor: **SAMBROOK, Rodney Martin**
**11 Brookfields**
**Calver,**
**Sheffield S30 1XA (GB)**
Inventor: **BINNER, Jonathan Graham Peel**
**41 Cranberry Close,**
**West Bridgford**
**Nottingham NG2 7TO (GB)**
Inventor: **SMITH, Robert, Terence**
**44 Hereward Road**
**Sheffield S5 7UB (GB)**
Inventor: **REICHERT, Jutta**
**6 Lyle Close**
**Melton Mowbrey,**
**Leicestershire LE13 1HS (GB)**

CHEMICAL ABSTRACTS, vol. 114, no. 6, 11 February 1991, Columbus, Ohio, US; abstract no. 48323g, H. YORITA ET AL. 'Manufacture of high-alumina porous ceramics, and the ceramics obtained' page 333 ; & JP-A-02149482

CHEMICAL ABSTRACTS, vol. 112, no. 24, 11 June 1990, Columbus, Ohio, US; abstract no. 222200k, K.NITTA 'Manufacture of high-purity porous ceramics' page 332 ; & JP-A-01252589

CHEMICAL ABSTRACTS, vol. 113, no. 26, 24 December 1990, Columbus, Ohio, US; abstract no. 236558r, K. FUTAKI ET AL. 'Manufacture of porous alumina ceramics' page 312 & JP-A-02229713

CHEMICAL ABSTRACTS, vol. 112, no. 24, 11 June 1990, Columbus, Ohio, US; abstract no. 222204q, F.ISO 'Manufacture of porous ceramics' page 332 ; & JP-A-01242474

(74) Representative: **Shaw, Laurence**
5th Floor,
Metropolitan House,
1 Hagley Road,
Edgbaston
Birmingham B16 8TG (GB)

## Description

The invention relates to porous refractory articles and in particular to the manufacture thereof.

It is known to introduce gas into a mixture of particulate solids and a liquid carrier to form a foam which is then dried and fired to form a porous solid, typically ceramic.

FR-A-1003500 published in 1952 discloses a method in which a colloidal suspension of a clay in water is subjected to the formation of bubbles and setting simultaneously, to form, it is said, intercommunicating pores of uniform size. In the example, the deflocculating agent is soda which reacts with aluminium powder to generate in situ bubble-forming hydrogen gas and to cause flocculation.

US-A-3041190 published in 1962 discloses the use of a colloidal alumina having a boehmite structure and an organic foaming agent to form a wet foam. It is said that the use of colloidal alumina renders the foam resistant to collapse for at least 30 minutes. The composition contains a resin e.g. a Vinsol resin, as the foaming agent

GB-A-1272010 published in 1972 discloses a method in which a particulate ceramic material is mixed with an aqueous colloidal dispersion binder and gas generating agent to provide after activation by heating a structure containing fine pores uniformly distributed therein.

US-A-4505586 published in 1985 discloses a method of making a foamed product by incorporating a thickener, surfactant and binder while introducing bubbles into a slurry of a boehmite and water. The surfactant will be anionic or nonionic when the slurry is alkaline, and cationic or nonionic when the slurry is acidic. The binder may be a cement.

DE-A-3729371 published in 1988 discloses in very general terms a predominantly open-celled porous structure formed by mixing a particulate ceramic material, an aluminosilicate hydrogel, a surfactant and a gel strengthening agent. The surfactant is preferably a silicone glycol, and the gel strengthening agent is preferably silica fume.

GB-A-2213814 published in 1989 discloses making a foamed mixture by mixing a slip of silicon dioxide and a solution of a foaming agent, agitating and adding an alkaline magnesium or calcium compound.

EP-A-0330963 published in 1989 discloses a process in which an aqueous ceramic composition comprising particulate ceramic material and a film-forming polymer is frothed. Surfactants such as sulphonates and natural soaps may be used.

JP-A-0234583 published in 1990 discloses dispersing a foaming agent into a sol followed by gelling to produce a porous ceramic having a porosity gradient.

EP-A-0360244 published in 1990 discloses a method of making a structure having macropores in which a ceramic powder is mixed with a solution of a high molecular weight material such as celluloses, polyacrylamides etc.

It is one object of the invention to provide improved methods of making articles and the improved articles. In particular green bodies, i.e. those ready for firing, may be made more quickly, with better mechanical strength and handling and machining characteristics. The method offers the possibility of making articles which are larger in volume and/or of smaller pore size than by comparable routes. In addition, the methods may be applied to a wide range of starting materials and result in the formation of articles which consist essentially of the starting materials only.

According to the invention in one aspect there is provided a method of making a porous refractory article composed of refractory materials, the method comprising the steps of:

a) forming a dispersion comprising particles in a liquid carrier;

b) introducing gas into the dispersion; and

c) removing the liquid carrier to provide a solid article having pores derived from the bubbles;

d) drying; and

e) firing

**characterised in that** the dispersion contains a polymerisable monomeric material.

The polymerisation preferably proceeds by crosslinking of reactive organic monomers. Examples include acrylates, such as ammonium acrylate or hydroxyethyl methacrylate; or the like. Preferably the monomers are dissolved in water or other liquid carrier to give a premix solution to which an initiator is added to cause free radical vinyl polymerisation to take place. Heat and/or a catalyst may be used to accelerate the process. In another variation, the dispersion includes a monosacharide such as galactose, which can be condensed to form a dimer, trimer or polymer, to have the same effect.

Preferably the dispersion has a critical viscosity from about 5 mPa.s to about 1000 mPa.s. By the term "critical viscosity" is meant the corresponding viscosity at the critical stress value, see K.S. Chou, L.J. Lee, "Effects of Dispersants on the Rheological Properties and Slip Casting of Concentrated Alumina Slurries", J. Amer. Ceram. Soc. 72 (9) 1989, 1622-1627

The critical viscosity of the dispersion will be in the range of from about 5 mPa.s, to about 1000 mPa.s preferably about 20 mPa.s to about 250 mPa.s. The preferred range is dependent on the method of gas entrapment. For entrapment by mechanical means e.g. stirring, the preferred range is about 20 mPa.s to about 200 mPa.s. For gas entrapment by mechanical means using a filter of defined pore size, the preferred range is about 50 mPa.s to about 250 mPa.s.

The dispersion comprises particles selected according to the intended end product in a liquid carrier and preferably is formulated so that the dispersion is essentially colloidal in nature. The average particle size will tend to be less than about 5 micrometres and preferably 95% of the particles will be less than about 2 micrometres. If the particles are larger than this size then the particles tend to settle or sediment. However, the particles can be much larger, say 100 micrometres or more, in which case agents will be present to control undesired settling; polymerisation of monomers is a suitable means for preventing settling.

The nature of the particles present will depend on the intended end use of the porous article to be formed. In the case of a ceramic it may be one or more of alumina, mullite, silicon carbide, silicon nitride, boron nitride, boron carbide, cordierite, silicas; zirconia, spinels, hydroxyapatite, magnesia and other metal oxides, e.g. tin oxide or titanium oxide or metal salts, e.g. nickel nitrate, nickel carbonate and the like.

Multi-component compositions may be used. Metals or alloys, e.g. ferrochrome, ferrosilicon, may be used. Dusts and other wastes from industrial processes may be used. The particles may be in the form of gelatinous precipitates. If necessary, powders may be ground or milled to achieve a suitable particle size distribution. This may be particularly useful if the particles are waste products from other processes. A high dispersion of the particles may also be prepared by a sol-gel technique.

The content of the solids in the dispersion will tend to be about 10% by weight as a minimum and about 90% by weight as a maximum; a preferred range is from about 40% to about 85% by weight.

Conveniently the liquid carrier is water but it may be organic, e.g. an alcohol, glycol or the like; or a mixture.

Where there is a risk that the formed dispersion will tend to undergo premature settling of solids it is preferred to add agents e.g. deflocculating agents so that the dispersion will be maintained. In the case of small particles, any premature settling or sedimentation will of course tend to disrupt the colloidal nature of the dispersion; the settling can take place by agglomeration of particles over time. The agent may be a deflocculating agent the nature of which will depend on the particles and the liquid carrier; for ceramic particles in water single or multiplecomponent surfactants (non-ionic, cationic or anionic), or carbohydrates may be used. Additives which adjust pH and polymers are also suitable agents. For large or small particles polymerisable monomers may also be used.

The bubbles of gas may be introduced in any convenient way. For convenience and economy the gas is air. Preferred methods of introduction include:

1. subjecting the dispersion to a high intensity and/or high speed agitation while exposed to the atmosphere. The agitation is preferably carried out using a mixer, e.g. a mechanical mixer rotated at high speed. The agitation is carried out for sufficient period to introduce bubbles of air into the dispersion until expansion has been achieved according to the desired physical and other properties of the end product. The expansion ratio, i.e. the volume of foam formed compared to the volume of the starting dispersion, can be between about 10:1 and about 1.0:1 preferably between about 2:1 and about 7:1. The foaming of the dispersion may also be judged visually, i.e. because the foamed composition takes on the appearance of a meringue or pumice when sufficient air has been introduced. Other gases which can be introduced include nitrogen and oxygen;

2. the gas may be introduced by bubbling the gas through a filter of a defined pore size into the dispersion while being stirred. In this case the final pore size of the foam may be dependant on the pore size of the filter;

3. in a variation, high pressure gas is forced through a fine filter, then intimately mixed with the dispersion in a suitable chamber and the aerated mixture is then ejected from a nozzle;

4. the aerosol method may also be used, in this case the dispersion is housed in a pressurised vessel and gas is injected under pressure into the dispersion to produce a foam when ejected via a nozzle;

5. in another technique, a reactive gas generating substance may be added to the dispersion, the substance being selected to react with acid or alkali present with the dispersion to produce the required gas in situ, either when included or when subjected to agitation or heating.

The foaming characteristics of the dispersion may be controlled by the inclusion of a surfactant. The foam may be stabilised by the inclusion of foam builders. The addition of one substance may fulfil both roles.

A bonding or stabilising agent may be added to prevent collapse of the formed foam. It has been discovered that a deflocculating agent can fulfil this role also but any cationic, anionic or non-ionic surfactant can be considered.

Other additives may be present, e.g. liquefiers, viscosity control agents, reinforcing fibres or particles, accelerators, retarders, colourants, and the like.

The foamed composition may be allowed or caused to acquire sufficient green strength to allow it to be moved from the parent container or mould. The composition may be subjected to drying to drive off the liquid. In the case of water the drying can be carried out at below about 100°C in an oven or using high frequency drying equipment. The drying step may be varied. For example, the drying may be done under reduced pressure to cause the foam to expand before the green strength is developed. The degree of expansion and hence the pore size of the foam will depend on the pressure selected. Drying at elevated temperature tends to cause a slight expansion of the foam. It is preferred to control the humidity during the drying step, to prevent uneven shrinkage and drying cracks, whereas if the polymerisable material is present in the dispersion this step might not need to be taken.

The dispersion may include other ingredients which play a role at the drying stage. Examples include binders such as resins, e.g. polyvinylchloride, gums, celluloses, and polymerisable materials to increase green strength. A specific class of such additives is organic monomers such as soluble acrylates and acrylamides. The additives are preferably dissolved in deionised water or other carrier liquid or a mixture to produce a premix solution, an initiator is added to the dispersion before foaming and a catalyst after foaming, Elevated temperature can be a suitable substitute for the catalyst or both may be used together. The resultant formed body after drying is relatively robust, and this addition is especially preferred when the article to be formed is of a complex shape.

Subsequent processing will depend on the nature of the intended article and the materials used; examples of suitable steps include shaping, e.g. machining, firing, impregnation of the pores with, e.g. catalysts and/or other agents. Porous articles made according to the invention can include: catalyst supports, flame supports; gas filters; airfresheners; ceramic armour; diesel particulate traps; insulation materials; artificial parts for the body; metal filters, reusable filters; liquid filters; storage and transportation for flammable and/or toxic materials, humidity sensors, chromatrography, filter candles for filtration of hot combustion gases, diaphragms, membranes, refractory separators, phase dividers and electrolytes for high temperature fuel cells.

The characteristics of the end product may be varied according to the conditions under which the method is performed. Where the contents of the solids in the dispersion is low, the viscosity will be reduced but the dispersion stability may be affected; lower viscosity dispersions tend to yield articles of lower density, i.e. higher pore content for a given solids content. By increasing the speed of stirring when introducing the gas bubbles the article formed will have a high pore content and a finer average pore size.

It is a feature of the invention that the final articles formed consist essentially of the starting refractory materials only, so avoiding the need for the removal of residual secondary materials, e.g. inorganic binders.

Our evaluations suggest that the pores size in the formed article can be controlled remarkably uniform. The pores may be closed and/or the porosity may be open. The true porosity may range from about 20% to about 95%. The article formed is relatively robust.

In order that the invention may be well understood it will now be described by way of illustration only with reference to the following Examples.

Example I

A slip was formed of 50 g of hydroxyapatite, 2.74 ml of DECON 75 and 50 ml of deionized water. The slip was subjected to ultrasonic agitation at an amplitude of 24 microns for 2 minutes. Agarose, 1 g, was added. The slip was heated to 90°C and then stirred in air at 1200 rpm. for 3 minutes. The foamed slip was poured into a filter paper box and then cooled in a refrigerator to 8°C, allowing the agarose to set. The set foam was dried to a green strength and then sintered at 1350°C for 1 hour. The product has a mean pore diameter of 24 micrometre.

Example II

Alumina, ammonium acrylate monomer, methylenebisacrylamide crosslinking agent, ammonium polycarboxylate dispersant, the ammonium salt of polymethacrylic acid, Teepol surfactant and water were mixed to form a low viscosity slip which was subjected to ultrasonic vibration in a KERRY 150W 24000Hz ultrasonics unit set at 28 micrometres movement for two minutes to form an essential colloidal suspension.

Ammonium persulphate initiator was stirred in. The slip was transferred to a beaker and stirred using a Kenwood mixer (175W power at speed setting for about 5 minutes) when a foam of uniform consistency was obtained. Triethanolamine catalyst was stirred in for about 30 seconds. The foam started to polymerise and was left for 24 hours at room temperature, and then dried at 60°C in an oven. The sample was then sintered by being heated at 400°C for one hour, then at 1450°C for two hours.

Example III

A premix solution was made of acrylamide, methylenebisacrylamide and water. Alumina and DECON 75 were added and the whole stirred until a smooth slip was obtained. (DECON 75 commercial formulations are believed to contain a polybasic dispersant and non-ionic surfactants). The slip was subjected to ultrasonic vibration for 2 minutes. The low viscosity slip was transferred to a beaker and ammonium persulphate was added. The slip was stirred using a mixer to generate a foam. Tetramethylethylenediamine was stirred in for a minute and left to homogenise the mix. It was transferred to a beaker and left to stand for 14 hours. The sample was then removed, and heated to 70°C in an oven. The samples was then heated slowly to 1450° at which it was left for one hour. The sample has 81% porosity.

**TABLE 1**

| Example N No. | Ceramic Material | Method of Gas Entrapment | Wt% of material | DECON in mg/g of material | Drying Temp. °C | Sintering Temp °C | Critical vics./ mPas | Density % |
|---|---|---|---|---|---|---|---|---|
| I | HA | S | 48.0 | 60.0 | Setting -8 Drying -RT | 1350 | 15.0 | 52.0 |
| II | Al$_2$O$_3$ | S | 68.0 | * | 60 | 1450 | 180.0 | 7.0 |
| III | Al$_2$O$_3$ | S | 59.0 | 40.0 | 70 | 1450 | 103.0 | 19.0 |

S = Mechanical Stirrer;
HA = Hydroxyapatite;
RT = Room temperature
* = see text

## Claims

1. A method of making a porous refractory article composed of refractory particles, the method comprising the steps of:

a) forming a dispersion comprising particles in a liquid carrier;
b) introducing gas into the dispersion; and
c) removing the liquid carrier to provide a solid article having pores derived from the bubbles;
d) drying; and
e) firing

**characterised in that** the dispersion contains a polymerisable monomeric material.

2. A method according to Claim 1, **characterised in that** the monomeric material is selected to polymerise by cross linking.

3. A method according to Claim 2, **characterised in that** the polymerisable material comprises a monomer and initiator therefor.

4. A method according to Claim 2 or 3, **characterised in that** the monomeric substance is an acrylate.

5. A method according to Claim 1, **characterised in that** the monomeric substance is a monosaccharide.

6. A method according to any preceding Claim, **characterised in that** the dispersion has a critical viscosity of from 5 mPa.s to 1000 mPa.s.

7. A method according to Claim 6, **characterised in that** dispersion has a critical viscosity from 20 mPa.s to 250 mPa.s.

8. A method according to Claim 6 or 7, **characterised in that** the critical viscosity is in the range from 20 mPa.s to 200 mPa.s and the bubbles are introduced by mechanical means.

9. A method according to Claim 6 or 7, **characterised in that** the critical viscosity is from 50 mPa.s to 250 mPa.s and the bubbles are introduced using a filter of a defined pore size.

10. A method according to any preceding Claim, **characterised in that** the average particle size of the particles in the dispersion is less than 5 micrometres.

11. A method according to Claim 10, **characterised in that** the average particle size of the particles in the dispersion is less than 2 micrometres.

12. A method according to any of Claims 1 to 9, **characterised in that** the average particle distribution ranges up to 100 micrometres and an agent is present to control undesired settling.

13. A method according to any preceding Claim, **characterised in that** content of the solids in the dispersion is 10% to 90% by weight, preferably 40% to 85% by weight.

14. A method according to any preceding Claim, **characterised in that** a gas is introduced into the dispersion at high speed with agitation.

15. A method according to any of Claims 1 to 14, **characterised in that** the gas is introduced by bubbling through a filter of defined pore size into the dispersion while being agitated.

16. A method according to Claim 15, **characterised in that** high pressure gas is forced through a fine filter, then intimately mixed with a dispersion in a suitable chamber and the mixture is ejected from a nozzle.

17. A method according to any of Claims 1 to 14, **characterised in that** the dispersion is housed in a pressurised vessel and is ejected therefrom via a nozzle and gas is injected under pressure into the dispersion to produce a foam when the dispersion is ejected via the nozzle.

18. A method according to any of Claims 1 to 13, **characterised in that** a gas generating substance is added to the dispersion and caused to generate gas **in situ**.

**19.** A method according to any preceding Claim, **characterised in that** the liquid is removed by drying under reduced pressure.

**Patentansprüche**

**1.** Verfahren zum Herstellen eines porösen feuerfesten Gegenstandes, bestehend aus feuerfesten Partikeln, wobei das Verfahren aus folgenden Schritten besteht:
a) Bilden einer Dispersion mit den Partikeln in einer Trägerflüssigkeit;
b) Einführen von Gas in die Dispersion und
c) Entfernen der Trägerflüssigkeit, so daß ein fester Gegenstand mit durch die Luftblasen entstehenden Poren gebildet wird;
d) Trocknen und
e) Brennen
**dadurch gekennzeichnet,** daß die Dispersion einen polymerisierbaren monomeren Stoff enthält.

**2.** Verfahren nach Anspruch 1, **dadurch gekennzeichnet,** daß der monomere Stoff so gewählt wird, daß er durch Vernetzung polymerisiert.

**3.** Verfahren nach Anspruch 2, **dadurch gekennzeichnet,** daß der polymersierbare Stoff ein Monomer und einen Aktivator für dieses enthält.

**4.** Verfahren nach Anspruch 2 oder 3, **dadurch gekennzeichnet,** daß der monomere Stoff ein Acrylat ist.

**5.** Verfahren nach Anspruch 1, **dadurch gekennzeichnet,** daß der monomere Stoff ein Monosaccharid ist.

**6.** Verfahren nach den vorstehenden Ansprüchen, **dadurch gekennzeichnet,** daß die Dispersion eine kritische Viskosität von 5 bis 100 mPa aufweist.

**7.** Verfahren nach Anspruch 6, **dadurch gekennzeichnet,** daß die Dispersion eine kritische Viskosität von 20 bis 250 mPa aufweist.

**8.** Verfahren nach Anspruch 6 oder 7, **dadurch gekennzeichnet,** daß die kritische Viskosität im Bereich von 20 bis 200 mPa liegt und Blasen durch mechanische Mittel eingeführt werden.

**9.** Verfahren nach Anspruch 6 oder 7, **dadurch gekennzeichnet,** daß die kritische Viskosität zwischen 50 und 250 mPa liegt und Blasen unter Verwendung eines Filters mit einer bestimmten Porengröße eingeführt werden.

**10.** Verfahren nach den vorstehenden Ansprüchen, **dadurch gekennzeichnet,** daß die durchschnittliche Partikelgröße in der Dispersion unter 5 um liegt.

**11.** Verfahren nach Anspruch 10, **dadurch gekennzeichnet,** daß die durchschnittliche Partikelgröße in der Dispersion unter 2 um liegt.

**12.** Verfahren nach Anspruch 1 bis 9, **dadurch gekennzeichnet,** daß die durchschnittliche Partikelverteilung bis zu 100 um beträgt und ein Mittel zur Kontrolle von unerwünschtem Absetzen enthält.

**13.** Verfahren nach den vorstehenden Ansprüchen, **dadurch gekennzeichnet,** daß der Feststoffgehalt in der Dispersion 10 bis 90 Gewichtsprozent beträgt, vorzugsweise jedoch 40 bis 80 Gewichtsprozent.

**14.** Verfahren nach den vorstehenden Ansprüchen, **dadurch gekennzeichnet,** daß ein Gas mit hoher Geschwindigkeit unter Rühren in die Dispersion eingeführt wird.

**15.** Verfahren nach Anspruch 1 bis 14, **dadurch gekennzeichnet,** daß ein Gas durch Blasenbildung durch einen Filter mit einer bestimmten Porengröße während des Rührens in die Dispersion eingeführt wird.

**EP 0 598 783 B1**

16. Verfahren nach Anspruch 5, **dadurch gekennzeichnet,** daß Gas unter hohem Druck durch einen feinen Filter gedrückt und dann in einer geeigneten Kammer innig mit der Dispersion vermischt und die Mischung über eine Düse ausgespritzt wird.

17. Verfahren nach Anspruch 1 bis 14, **dadurch gekennzeichnet,** daß sich die Dispersion in einem unter Druck stehenden Behälter befindet und aus diesem über eine Düse ausgespritzt wird und daß Gas unter Druck in die Dispersion gespritzt wird, so daß Schaum entsteht, wenn die Dispersion durch die Düse ausgespritzt wird.

18. Verfahren nach Anspruch 1 bis 13, **dadurch gekennzeichnet,** daß ein gaserzeugender Stoff der Dispersion zugesetzt wird, so daß Gas **an Ort und Stelle** entsteht.

19. Verfahren nach den vorstehenden Ansprüchen, **dadurch gekennzeichnet,** daß Flüssigkeit durch Trocken bei gemindertem Druck entfernt wird.

**Revendications**

1. Méthode de fabrication d'un article réfractaire poreux composé de particules réfractaires, la méthode comprenant les phases suivantes :

   a) la formation d'une dispersion comprenant des particules dans un liquide porteur ;
   b) l'introduction d'un gaz dans la dispersion et
   c) le retrait du liquide porteur afin de fournir un article solide ayant des pores provenant des bulles ;
   d) le séchage et
   e) la cuisson

   **caractérisée en ce que** la dispersion contient une matière monomérique polymérisable.

2. Méthode qui, selon la revendication 1, est caractérisée en ce que la matière polymérisable est choisie pour polymériser par réticulation.

3. Méthode qui, selon la revendication 2, est caractérisée en ce que la matière polymérisable comprend un monomère et un initiateur.

4. Méthode qui, selon les revendications 2 ou 3, est caractérisée en ce que la substance monomérique est de l'acrylate.

5. Méthode qui, selon la revendication 1, est caractérisée en ce que la substance monomérique est une monosaccharide.

6. Méthode qui, selon toute revendication précédente, est caractérisée en ce que la dispersion a une viscosité critique qui varie entre 5 mPa.s et 1000 mPa.s.

7. Méthode qui, selon la revendication 6, est caractérisée en ce que la dispersion a une viscosité critique de 20 mPa.s à 250 mPa.s.

8. Méthode qui, selon les revendications 6 ou 7, est caractérisée en ce que la viscosité critique se situe dans un éventail de 20 mPa.s à 200 mPa.s et les bulles sont introduites par des moyens mécaniques.

9. Méthode qui, selon les revendications 6 ou 7, est caractérisée en ce que la viscosité critique varie de 50 mPa.s à 250 mPa.s et les bulles sont introduites à l'aide d'un filtre dont les pores ont une taille déterminée.

10. Méthode qui, selon toute revendication précédente, est caractérisée en ce que la dimension particulaire moyenne des particules dans la dispersion est inférieure à 5 micromètres.

11. Méthode qui, selon la revendication 10, est caractérisée en ce que la dimension particulaire moyenne des particules dans la dispersion est inférieure à 2 micromètres.

**12.** Méthode qui, selon toute revendication de 1 à 9, est caractérisée en ce que la distribution moyenne des particules atteint jusqu'à 100 micromètres et un agent est présent pour contrôler la fixation non souhaitée.

**13.** Méthode qui, selon toute revendication précédente, est caractérisée en ce que la teneur de la dispersion en solides varie de 10 % à 90 % par poids, de préférence de 40 % à 85 % par poids.

**14.** Méthode qui, selon toute revendication précédente, est caractérisée en ce que le gaz est introduit dans la dispersion par agitation à grande vitesse.

**15.** Méthode qui, selon toute revendication de 1 à 14, est caractérisée en ce que le gaz est introduit dans la dispersion en formant des bulles tout en étant agité et en passant par un filtre dont les pores ont une dimension déterminée.

**16.** Méthode qui, selon la revendication 15, est caractérisée en ce que le gaz sous haute pression est poussé au travers d'un filtre fin et ensuite méticuleusement mélangé avec une dispersion dans une chambre appropriée, le mélange étant ensuite éjecté au moyen d'un gicleur.

**17.** Méthode qui, selon toute revendication de 1 à 14, est caractérisée en ce que la dispersion se fait dans un récipient pressurisé dont elle est éjectée au moyen d'un gicleur et le gaz est injecté sous pression dans la dispersion afin de produire une mousse quand la dispersion est éjectée au moyen d'un gicleur.

**18.** Méthode qui, selon toute revendication de 1 à 13, est caractérisée en ce qu'une substance qui produit un gaz est ajoutée à la dispersion et elle est amenée à produire du gaz **in situ**.

**19.** Méthode qui, selon toute revendication précédente, est caractérisée en ce que le liquide est extrait par séchage sous pression réduite.